# FASCICULE DE BREVET EUROPEEN

(11) **EP 0 941 142 B1**
(45) Date de publication et mention de la délivrance du brevet: **09.07.2003**
(21) Numéro de dépôt: 97948951.5
(22) Date de dépôt: 28.11.1997
(51) Int. Cl.: B03C 1/32, G01N 27/447, B01D 57/02

(54) **PROCEDE ET DISPOSITIF DE SEPARATION DE PARTICULES OU MOLECULES PAR MIGRATION A TRAVERS UN FERROFLUIDE**
VERFAHEN UND VORRICHTUNG ZUM TRENNEN VON TEILCHEN ODER MOLEKULEN DURCH MIGRATION ÜBER EIN FERROFLUID
METHOD AND DEVICE FOR SEPARATING PARTICLES OR MOLECULES BY MIGRATION THROUGH A FERROFLUID

(30) Priorité: 29.11.1996 FR 9614661
(43) Date de publication de la demande: 15.09.1999
(73) Titulaire: CENTRE NATIONAL DE LA RECHERCHE SCIENTIFIQUE, 75016 Paris Cédex (FR)
(72) Inventeur: MAYER, Pascal, F-01200 Eloise (FR); BIBETTE, Jérôme, F-33000 Bordeaux (FR); VIOVY, Jean-Louis, F-75013 Paris (FR)
(74) Mandataire: Texier, Christian
(86) Numéro de dépôt international: FR9702149
(87) Numéro de publication internationale: WO98023379

(56) Documents cités:
- US-A- 3 140 714
- US-A- 4 526 681
- US-A- 4 911 806
- US-A- 5 541 072

## Description

La présente invention est relative aux méthodes de séparation de particules ou de molécules par migration dans un milieu de séparation.

On connaît déjà de nombreuses méthodes dans lesquelles une séparation est obtenue par application au sein d'un milieu de séparation d'une force motrice à des particules ou molécules à séparer.

Si la force motrice est de type électrique, on parle d'électrophorèse, si elle est d'origine hydrodynamique, on parle de chromatographie ou de filtration.

### Contexte et état de l'art

La chromatographie, la filtration et l'électrophorèse sont très largement employées pour purifier ou analyser des molécules ou des macromolécules synthétiques ou naturelles, des particules, des cellules, des organelles ou des virus. De nombreux modes de mise en oeuvre de ces méthodes existent, et on en trouvera la description dans différents ouvrages, comme par exemple "Chromatographie en phase liquide et supercritique", R. Rosset, M. Caude, A. Jardy, Masson ed., Paris 1991 ; "Practical High Performance Liquid Chromatography, V.R. Meyer, John Wiley ed. Chichester, NY USA ; "Chromatography of polymers", T. Provder ed, ACS publ. Washington DC, 1993 ou "Electrophoresis : theory, techniques and biochemical and clinical applications, A.T. Andrews, Oxford University Press, NY 1986".

Ces techniques présentent cependant des limitations. Pour l'ADN, par exemple, la chromatographie ne permet de séparation que pour des molécules de taille relativement petite, et on lui préfère le plus souvent l'électrophorèse en gel d'agarose ou d'acrylamide.

L'électrophorèse en champ constant elle-même ne permet pas de séparer de molécules plus grandes que quelques dizaines de milliers de paires de bases (kilobases, Kb), alors que les chromosomes intacts de la plupart des organismes cellulaires, procaryotes ou eucaryotes, et de nombreux ADN viraux, sont longs de plusieurs centaines de kilobases ou de plusieurs mégabases (millions de paires de bases, Mb). Les ADN humains par exemple, ont des tailles comprises entre 50 et 200 Mb. Pour de nombreuses applications en médecine et en génétique, comme la cartographie génétique (génome), l'analyse de la variabilité, le clonage en chromosomes artificiels de levure, le diagnostic, etc, on a besoin de séparer en fonction de leur taille des ADN excédant les limites de séparation de l'électrophorèse en champ constant.

Pour résoudre ce problème, une nouvelle technique appelée électrophorèse pulsée en gel a été proposée (PCT WO 84/02001, inventeurs C. Cancor et D.C. Schwartz, 24.05.84). De nombreuses variantes de cette technique ont également été développées (voir par exemple EP 0 356 187, EP 0 256 737, US 4,971,671, EP 0 395 315, "Pulsed filed Electrophoresis", B. Birren, E. Lai, Academic Press, Londres, 1993 ; "Pulsed filed Gel electrophoresis", Meth. in Mol. Biol., M. Burmeister and L. Ulanovsky Eds, Humana Press, Totowa, NJ USA, 1992, et les références citées dans ces brevets et ouvrages).

Malgré ses succès importants, cette technique conserve, elle aussi, des inconvénients. Le principal est sa lenteur : il faut plusieurs jours pour séparer des chromosomes de plusieurs mégabases. Egalement, la séparation s'effectuant dans un gel, il est difficile de récupérer les ADN après séparation, et cette méthode se prête mal à des applications préparatives. Enfin, elle reste limitée à des tailles inférieures à 10 Mb.

L'électrophorèse peut également être utilisée pour séparer des particules de taille micronique ou subicronique (particules colloïdales, cellules, virus, globules rouges ou globules blancs, etc...), comme cela peut être nécessaire dans l'analyse d'échantillons, dans la purification, pour le diagnostic ou le traitement de certaines maladies.

Si les particules à séparer ont des potentiels de surface différents, on peut les séparer en milieu liquide en fonction de ce potentiel de surface. Par contre, il est souhaitable pour de nombreuses applications de les séparer en fonction de la taille des particules ou molécules ayant le même potentiel de surface. Ceci ne peut être réalisé en milieu liquide, et il a été proposé d'effectuer ce type de séparation par éiectrophorèse en gel d'agarose très dilué, mais les particules ont tendance à se piéger dans le gel, et ces gels sont très délicats à manipuler. De plus, cette méthode ne fonctionne que pour des particules relativement petites, typiquement moins d'un micromètre (G.A. Griess, P. Serwer, Biopolymers, 29, 1863-1866 (1990)). Dans ce cas également, l'électrophorèse pulsée permet d'étendre un peu la gamme accessible à la méthode, mais de façon limitée. Enfin, il convient de signaler qu'elle ne permet pas de séparer de façon satisfaisante des particules dont la taille est voisine.

En résumé, si des méthodes sont déjà connues pour séparer des particules, des grandes molécules et notamment l'ADN, ces méthodes présentent de nombreux inconvénients, liés notamment à leur lenteur et aux difficultés que l'on rencontre avec ces méthodes pour effectuer la séparation de molécules ou particules de taille importante.

Un but de l'invention est de proposer une méthode de séparation qui ne présente pas ces différents inconvénients.

On connaît déjà des méthodes de séparation qui mettent en jeu une combinaison de champs électriques et magnétiques pour séparer des particules, et notamment l'ADN.

Ces méthodes, dites d'électromagnétophorèse; ont été décrites par exemple dans le brevet US 4,726,904 ou encore dans les publications suivantes :
- Mukherjee, H.G., majumdar, D., "Fresenius'Z" Anal. Chem., 277, 205 (1975),
- O.Lumpkin, J. Chem. Phys. 92, 3848-3852 (1990)
- Kowalczuk, J.S., Acta Chromatogr. 1, 34-55 (1992).

Le document US 5 541 072 décrit un dispositif permettant de séparer les particules magnétiques et les particules non magnétiques d'une substance. La substance est introduite dans un milieu test contenant des particules magnétiques porteuses de ligands susceptibles de capter les molécules de la substance à séparer. Le milieu est ensuite soumis à un gradient de champ magnétique entraînant le déplacement des particules magnétiques transportant les molécules à séparer et le regroupement de ces particules vers une zone de champ magnétique maximal. %

Le document US 4 911 806 décrit un procédé de séparation de particules diélectriques, selon lequel on applique au milieu de séparation un champ électrique et un champ magnétique. Les champs sont perpendiculaires entre eux et oscillent avec un déphasage de 90 degrés. Ce procédé permet de séparer les molécules en fonction de leur fréquence de relaxation de polarisation.

Dans ces méthodes, le champ magnétique complète le champ électrique pour faire migrer des charges à séparer.

Il a déjà été proposé par US 4,526,681 une technique de séparation de particules magnétiques selon laquelle les particules à séparer sont introduites dans un milieu ferrorluide sur lequel on applique un champs magnétique qui permet de répartir lesdites particules selon un gradient de susceptibilité magnétique.

Toutefois, cette technique ne peut s'appliquer que pour la séparation de particules magnétiques ayant 'des susceptibilités magnétiques différentes.

### Objets de l'invention

L'invention propose quant à elle une méthode de séparation d'espèces selon la revendication 1.

Une telle méthode permet la séparation des particules ou molécules en fonction de leur vitesse de déplacement au sein du ferrofluide et est plus performante que les méthodes connues à ce jour sur le plan de la vitesse de séparation et/ou sur le plan de la gamme de taille dans laquelle la séparation s'opère.

On notera que la méthode proposée par l'invention permet de séparer des particules essentiellement non-magnétiques (susceptibilité magnétique minime ou nulle).

La force motrice ou de migration utilisée est généralement non magnétique.

Dans un mode de réalisation préféré de l'invention, particulièrement intéressant pour la séparation de particules portant une charge électrique, la force de migration est obtenue par application d'un champ électrique au sein du milieu de séparation. La méthode constitue alors une méthode d'électrophorèse.

Il sera en général avantageux de choisir comme milieu de séparation un ferrofluide dont les particules magnétiques sont essentiellement neutres, afin d'éviter leur déplacement sous l'action du champ électrique. Cependant, certaines applications particulières peuvent requérir au contraire des particules magnétiques de charge donnée, si l'on veut par exemple diminuer ou augmenter l'interaction des particules à séparer avec les particules.

Dans un mode de réalisation préféré, qui peut être combiné ou non avec les modes préférés décrits ci-dessus, le champ magnétique est essentiellement perpendiculaire à la direction de déplacement des particules.

Deux versions de mise en oeuvre préférées par ailleurs, qui peuvent être combinées avec n'importe lesquels des modes décrits ci-dessus mais s'excluent mutuellement, consistent à utiliser un champ magnétique :
a) essentiellement constant dans la zone où il est appliqué,
b) présentant un gradient d'intensité dans la zone où il est appliqué,
   De même, deux versions de mise en oeuvre, qui peuvent être combinées avec n'importe lesquels des modes décrits ci-dessus mais s'excluent mutuellement, consistent à utiliser :
c) une zone de séparation qui présente dans la direction du champ magnétique une épaisseur qui est essentiellement constante, cette épaisseur étant choisie avec la concentration des particules magnétiques dans le fluide de séparation et l'amplitude du champ magnétique en fonction des dimensions des particules ou molécules à séparer ; notamment, des épaisseurs plus grandes sont utilisées de préférence pour les particules et molécules de plus grande taille ;
d) la zone de séparation présente une épaisseur variable selon la direction de migration préférentielle des particules ou molécules à séparer, l'épaisseur de cette zone étant choisie, avec la concentration des particules magnétiques dans le fluide de séparation et l'amplitude du champ magnétique, en fonction des dimensions des particules et molécules à séparer ; notamment, des épaisseurs plus grandes sont utilisées de préférence pour les particules et molécules de plus grande taille.

Les méthodes selon les alinéas a et c sont de préférence utilisées pour obtenir une haute résolution sur une gamme de tailles relativement faible, alors que les méthodes selon les alinéas b et d sont plutôt adaptées à des séparations dans une grande gamme de tailles.

Dans une variante particulièrement simple de réalisation de l'alinéa d, les parois de la zone de séparation essentiellement perpendiculaires au champ magnétique sont légèrement inclinées l'une par rapport à l'autre, conférant à ladite zone une forme de "coin".

Dans les modes de réalisation privilégiés décrits précédemment, les meilleurs résultats sont le plus souvent obtenus quand la dimension moyenne de la zone de séparation dans la direction parallèle à la direction du champ magnétique est comprise entre 1 micromètre et 1mm, et de préférence entre 10 micromètres et 100 micromètres.

On met avantageusement en oeuvre cette méthode avec les différentes étapes suivantes :
- remplissage de la zone de séparation par le milieu de séparation ;
- activation du champ magnétique ;
- introduction d'un côté de la zone de séparation d'une certaine quantité d'un échantillon contenant les particules ou molécules à séparer ;
- activation des moyens exerçant une force motrice sur les particules ou molécules à séparer.

Il est à noter que l'ordre dans lequel ces étapes sont énumérées correspond à un mode de réalisation privilégié de l'invention, mais qu'il est également possible dans le cadre de l'invention de les mettre en oeuvre dans un ordre différent, par exemple en activant le champ magnétique après l'introduction des échantillons à séparer, et/ou en activant plutôt la force motrice.

On peut également mettre en oeuvre dans le cadre de l'invention, en sortie de la zone de séparation, une détection ou une observation des passages des produits séparés et/ou une collecte des produits séparés.

Avantageusement également, on remplace automatiquement le ferrofluide entre deux opérations de séparation.

L'invention est particulièrement intéressante pour la séparation de particules et de macromolécules de grande taille, comme les acides nucléiques et particulièrement l'ADN, et plus particulièrement encore les molécules d'ADN de taille comprise entre 50 Kb et plusieurs centaines de Mb. Elle est également particulièrement intéressante pour la séparation d'objets en suspension dans un liquide, tels que les cellules, les virus, les suspensions colloïdales non magnétiques, les liposomes. Ces exemples ne doivent cependant pas être compris comme une restriction du champ de l'invention, qui peut également dans certains cas s'avérer avantageuse pour la séparation d'autres types d'objets, comme là encore donnés à titre d'exemples non restrictifs, des protéines, des macromolécules synthétiques ou naturelles.

Un autre but de l'invention, est de proposer un dispositif pour la séparation de particules ou de molécules qui comprend une cellule qui reçoit un milieu de séparation, qui est un ferrofluide, c'est-à-dire une suspension colloïdale de particules magnétiques, des moyens pour introduire ces particules ou de molécules dans ledit milieu de séparation, des moyens pour appliquer à ce fluide un champ magnétique, caractérisé en ce qu'il comporte des moyens pour appliquer au sein dudit milieu au moins une force de migration et en ce que pour l'application d'un champ magnétique sont des moyens aptes à créer au moins une alternance d'une zone riche et d'une zone pauvre en particules magnétiques de ferrofluide, que les particules ou molécules à séparer traversent lors de leur migration, ce qui opère leur séparation.

La méthode et le dispositif conformes à l'invention sont avantageusement utilisés dans le cadre de méthode de diagnostic, pour séparer des particules et des molécules et notamment mais non exclusivement des ADN, des cellules, des globules du sang ou des virus.

Ils peuvent également être utilisés pour l'obtention de médicaments, produits vétérinaires ou phytosanitaires, produits cosmétiques, comportant par exemple dans leur composition des liposomes, des protéines, des ADN, des cellules, des globules du sang, des virus, ou des suspensions colloïdales.

D'autres caractéristiques et avantages de l'invention ressortiront encore de la description qui suit. Cette description est purement illustrative et non limitative.

### Présentation des figures

Cette description doit être lue en regard des dessins annexés sur lesquels :
- la figure 1 une représentation schématique en vue de dessus d'un exemple de dispositif permettant la mise en oeuvre de l'invention ;
- la figure 2 est une vue schématique en coupe du dispositif de la figure 1 ;
- la figure 3 représente une variante de réalisation préférée d'un dispositif conforme à l'invention similaire à celui des figures 1 et 2 ;
- les figures 4a à 4d sont des microphotographies illustrant des exemples de migration ;
- les figures 5a et 5b sont des graphes sur lesquels on a porté deux exemples d'évolution en fonction du temps de la fluorescence en sortie d'un dispositif de séparation conforme à celui de la figure 3.

### Description détaillée

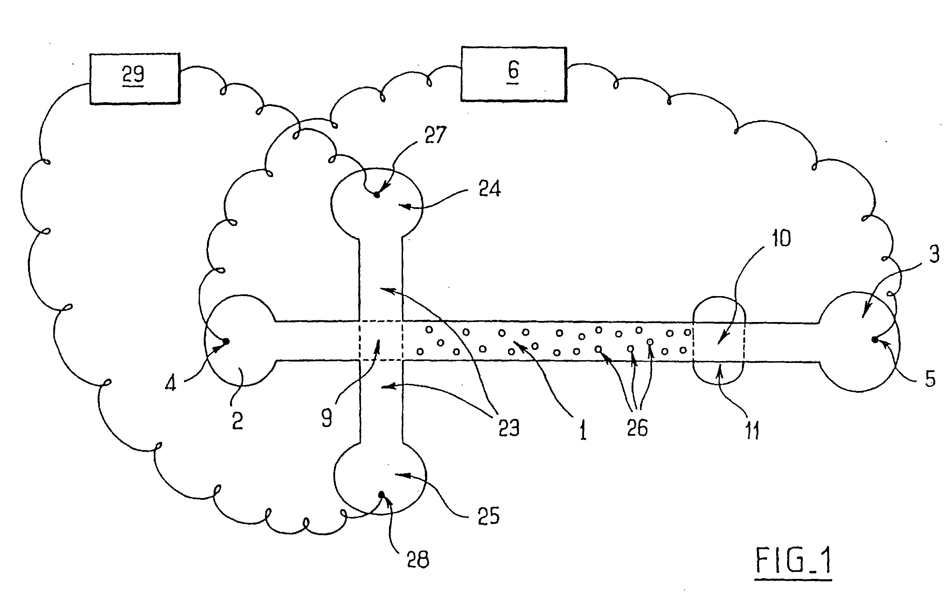

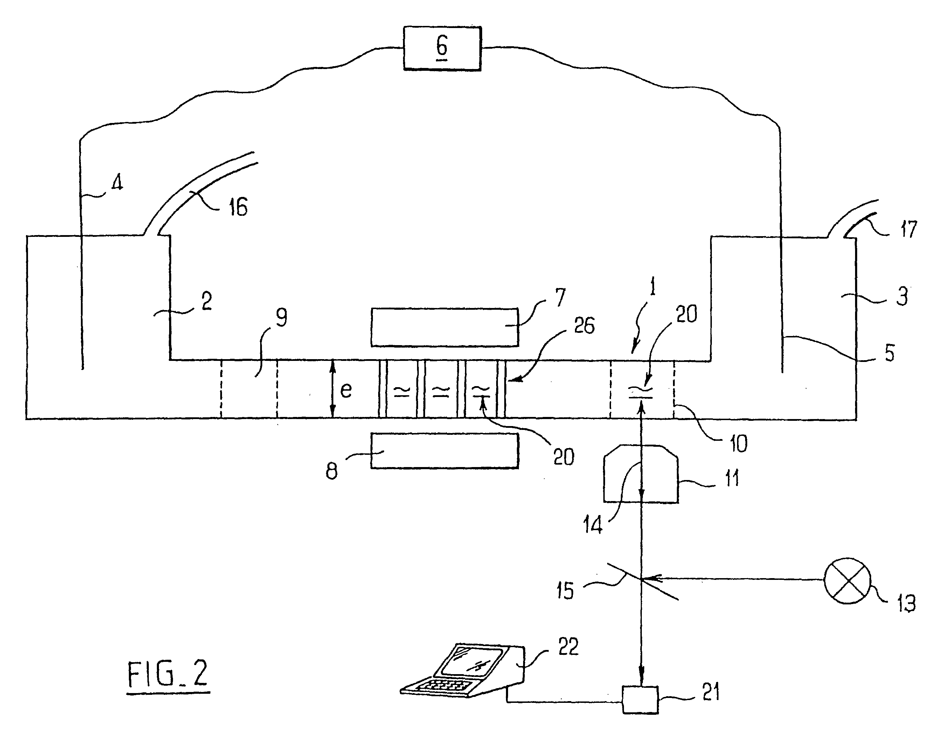

Les figures 1 et 2 illustrent un dispositif possible pour la mise en oeuvre de l'invention.

Ce dispositif comprend un canal 1 essentiellement parallélépipédique, reliant deux réservoirs 2 et 3, et dans lequel est introduit, avant la phase de séparation, un ferrofluide, c'est-à-dire un liquide contenant une suspension colloïdale de particules magnétiques.

Ce canal 1 constitue la zone de séparation.

Le dispositif comporte des moyens pour créer dans au moins une partie dudit canal 1 un champ magnétique essentiellement parallèle à l'épaisseur e dudit canal.

Ce champ magnétique a pour effet d'organiser le ferrofluide, dans lequel se créent des colonnes 26 riches en particules magnétiques et une ou plusieurs zones pauvres en particules magnétiques. Différents moyens susceptibles de créer un tel champ magnétique sont connus de l'homme de l'art, par exemple les bobines d'Helmoltz, les électroaimants, ou les aimants permanents.

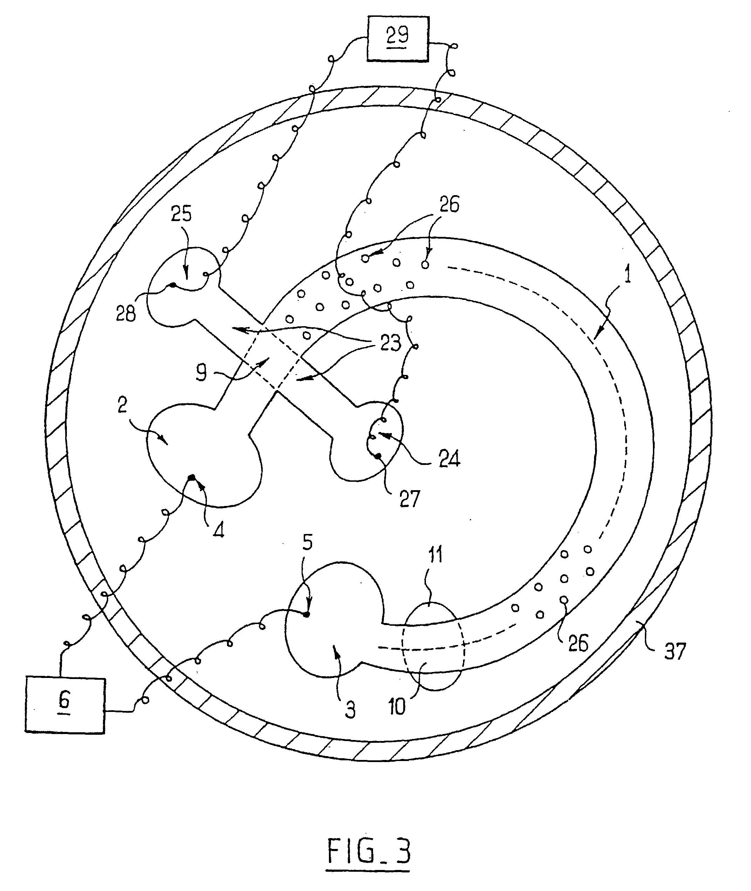

Pour la plupart des applications, il est intéressant d'appliquer dans la zone de séparation un champ magnétique essentiellement uniforme. Un moyen simple de réaliser un tel champ, schématisé dans la figure 2, est de placer de part et d'autre du canal de séparation 1 les pôles 7 et 8 (respectivement Nord et Sud) d'un aimant permanent ou d'un électroaimant. Un autre moyen, schématisé dans la figure 3, consiste à construire un canal d'axe essentiellement circulaire et concentrique à une bobine d'Helmoltz 37 alimentée par un générateur de courant (non représenté). (Tous les autres éléments du dispositif ont des fonctions similaires à celles décrites à propos de la figure 1).

Il est à noter, cependant, que certaines applications peuvent requérir un champ non uniforme. On sait en effet (E.M. Lawrence et al., Int. J. of Modern Phys. B, 8, 2765-2777, 1994) que la taille et l'espacement des colonnes riches en particules magnétiques dépendent du champ magnétique et de l'épaisseur de la cellule. On peut donc jouer sur-le-champ magnétique en fonction de la séparation souhaitée.

Dans de nombreux cas, et en particulier quand les particules à séparer sont chargées, par exemple s'il s'agit de polyéléctrolytes comme l'ADN ou les protéines, de cellules ou de virus, il est avantageux de les mouvoir par l'intermédiaire d'un champ électrique, essentiellement perpendiculaire au champ màgnétique utilisé pour structurer le milieu de séparation.

A cet effet, le dispositif comporte deux électrodes 4 et 5 reliées aux bornes d'un générateur de tension ou de courant 6 et plongeant respectivement dans les réservoirs 2 et 3. Ledit générateur 6 peut travailler en mode courant constant, en mode tension constante, en mode puissance dissipée constante, ou délivrer un courant ou une tension ayant un profil plus compliqué.

En particulier, il peut être avantageux dans certains cas, et notamment pour séparer des molécules d'ADN de très grande taille, d'utiliser une tension dont le sens ou la direction change au cours du temps de façon répétitive, selon le principe de l'électrophorèse en champs pulsés, bien connu de l'Homme de l'Art et décrit par exemple dans "Pulsed field Electrophoresis", B. Birren, E. Lai, Academic Press, Londres, 1993 ; "Pulsed filed gel electrophoresis", Meth. In Mol. Biol., M. Burmeister and L. Ulanovsky, Humana Press, Totowa, NJ USA, 1992.

En général également, l'électrode de même polarité que les particules à séparer est placée du côté de la zone de séparation 1 par lequel on introduit l'échantillon, mais cette disposition peut être parfois inversée si une électro-osmose importante a lieu dans la cellule, par exemple si les particules magnétiques du ferrofluide sont chargées et du même signe que les particules à séparer.

Pour évacuer les gaz éventuellement formés aux électrodes 4 et 5, les réservoirs 2 et 3 sont avantageusement mis en communication avec l'air libre ou un réservoir commun, soit directement, soit par l'intermédiaire d'évents 16 et 17.

Le dispositif utilisé pour mettre en oeuvre l'invention peut comporter en outre de façon optionnelle une zone d'introduction d'échantillon 9. Une configuration intéressante pour la réalisation simultanée de la zone de séparation et de la zone d'introduction d'échantillon, consiste à obtenir le volume dans lequel s'effectue la séparation par un procédé de gravure ou de moulage sur un support isolant (par exemple du verre ou une matière plastique), et à utiliser pour l'introduction d'une quantité bien définie d'échantillon un canal annexe 23 gravé sur le même support et relié à un ou plusieurs réservoirs ou canalisations 24, 25, entre lesquels on peut imposer une différence de pression ou une différence de potentiel électrique par exemple à l'aide de deux électrodes optionnelles 27 et 28 alimentées par un générateur 29, comme décrit par exemple dans A.T. Woolley et al., Proc. Natl. Acad. Sci US, 91, 11348-11352 (1994).

Les moyens d'introduction de l'échantillon peuvent également par exemple être constitués :
- d'une ou plusieurs encoches ou "puits" dans lesquels on dépose l'échantillon, comme en électrophorèse sur gel "Electrophoresis : theory, techniques and biochemical and clinical applications, A.T. Andrews, Oxford University Press, NY 1986",
- ou encore d'un système de surpression ou de dépression comme en électrophorèse capillaire, voir par exemple "Capillary Electrophoresis", P.D. Grossman, J.C. Colburn eds, Academic Press, San Diego, CA, USA, 1992),
- ou encore d'un canal par lequel un filet d'échantillon est déversé en continu, comme en électrophorèse en veine liquide,
- ou encore d'un des modes d'introduction des échantillons employés en chromatographie ("Chromatographie en phase liquide et supercritique", R. Rosset, M. Caude, A. Jardy, Masson ed., Paris 1991 ; "Practical High performance Liquid Chromatography, V.R. Meyer, John Wiley ed. Chichester, NY, USA ; "Chromatography of polymers", T. Prodver ed, ACS pùbl. Washington DC 1993).

Cette liste n'est bien entendu pas exhaustive.

De même, de nombreux moyens susceptibles de détecter les produits séparés peuvent, optionnellement, être associés à l'invention, du côté du canal 1 opposé à son entrée (fenêtre de sortie 10). De nombreux détecteurs employés en chromatographie, en électrophorèse ou ailleurs sont connus de l'homme de l'art ("Capillary Electrophoresis", P.D. Grossman, J.C. Colurn eds, Academic Press, San Diego, CA, USA, 1992) et peuvent être utilisés dans le cadre de l'invention : détection par absorption de la lumière visible ou ultraviolette, par émission de fluorescence, de luminescence ou du rayonnement émis par une substance radioactive, par conductimétrie ou encore par diffusion de lumière, etc.

Le mode de réalisation présenté dans la figure 2 correspond à une détection par fluorescence : le dispositif comporte une source 13 émettant une lumière susceptible d'être absorbée par les particules à détecter 20, focalisée par un objectif 11 dans la fenêtre de détection 10. Lesdites particules réémettent une lumière de fluorescence 14 de plus grande longueur d'onde que la lumière incidente 12, et séparée de celle-ci par un filtre dichroïque 15, pour être détectée par un détecteur photosensible 21, optionnellement relié à un système d'analyse 22.

La cellule peut également avantageusement, bien que non nécessairement, être équipée, de préférence près de sa face de sortie, d'un ou plusieurs dispositifs destinés à collecter les différents produits séparés. De tels systèmes de collection de fractions sont connus de l'Homme de l'Art, et déjà employés en chromatographie et en électrophorèse. Ils n'ont pas été représentés sur la figure par souci de clarté. Il peut s'agir, à titre d'exemple, d'une série de tubulures collectant les produits en différents endroits de la cellule, pour les répartir dans différents récipients (K. Hannig, Electrophoresis, 3, 235-243 (1982)), ou au contraire d'une tubulure unique déversant les produits sortant de la cellule à des temps différents dans différents récipients (voir par exemple R. Grimm, J. Cap. Elec. 2, 111-115 (1995), ou encore d'une membrane défilant au voisinage de la sortie de la cellule et capable d'adsorber un ou plusieurs des produits séparés (K.O. Eriksson, A. Palm, S. Hjerten, Anal. Bioghem., 201 211-215 (1992)).

On décrit maintenant le mode de fonctionnement de l'invention suivant le mode préféré de réalisation présenté en figure 3.

Dans un premier temps, on remplit la zone de séparation 1 par un ferrofluide, en utilisant par exemple la capillarité ou une surpression dans l'un des réservoirs 2 ou 3. On applique ensuite progressivement à l'aide de la bobine d'Helmoltz 37, un champ magnétique suffisant pour ordonner le ferrofluide, suivant le mécanisme décrit dans la publication précicée de Lawrence et al. (1994) : sous l'action de champ, chaque particule magnétique du ferrofluide se transforme en un micro-aimant, et ces aimants se regroupent pour former des colonnes riches en particules magnétiques régulièrement espacées, et parallèles au champ magnétique.

On introduit ensuite l'échantillon contenant les particules à séparer, par exemple des molécules d'ADN. Si cet échantillon est du type solide, comme par exemple un insert d'agarose bien connu de l'Homme de l'Art, il peut être simolement placé dans le réservoir 25 à l'aide d'une micro-spatule. S'il est liquide, il peut être introduit dans ledit réservoir à l'aide d'une micropipette, ou à l'aide d'une tubulure. On applique alors soit une légère surpression entre les réservoirs 25 et 24, soit une différence de potentiel électrique entre lesdits réservoirs, à l'aide des électrodes optionnelles 27 et 28. Ladite surpression ou ladite différence de potentiel électrique ont pour effet d'induire une migration des molécules ou particules contenues dans l'échantillon du réservoir 25 vers le réservoir 24 par l'intermédiaire du canal 23, et en particulier de venir former à l'entrée de la zone de séparation 1 une zone d'échantillon 9 bien délimitée.

On cesse alors l'introduction, et on active le dispositif créant sur les particules à séparer une force de migration (générateur 6, électrodes 7 et 8). Sous l'action de cette force, les particules à séparer (20) pénètrent dans la zone de séparation 1. Au cours de leur migration dans cette zone, elles sont séparées, et les différents produits initialement présents dans l'échantillon peuvent être identifiés par leur temps de migration à l'aide du détecteur 21, ou collectés.

On propose ci-après un modèle explicatif de la technique de séparation proposée par l'invention. Ce modèle est donné pour faciliter la compréhension de l'invention et ne se veut aucunement exhaustif et restrictif.

Au cours de leur migration, les particules à séparer contenues dans l'échantillon rencontrent les colonnes de particules magnétiques, dont la cohésion est assurée par la présence du champ. Les particules doivent contourner ces obstacles pour se mouvoir, et sont donc ralenties. On conçoit que ce ralentissement dépende de la taille des particules, les particules plus grandes étant plus freinées.

Divers mécanismes possibles pour un tel ralentissement ont déjà été proposés dans le contexte de l'électrophorès en gel (voir par exemple G.W. Slater et al. Biopolymers, 27, 509-524 (1988)) ou dans celui de l'électrophorèse dans des réseaux microlithographiques (voir par exemple E.M. Sevick et D.R.M. Williams, Phys. Rev. Lett., 76, 2595-2598 (1996)). Cependant, l'invention présente plusieurs avantages par rapport à ces méthodes de l'art antérieur :
a/ La taille maximale des particules qui peut être séparée est liée à la taille des pores. Au sein d'un gel, cette taille de pores est difficilement contrôlable, et en particulier il est difficile voire impossible de préparer des gels présentant une taille de pores supérieure à quelques dixième de micromètres. Dans le cas de la microlithographie, il est difficile de construire des cellules épaisses de plus d'une dizaine de microns, ce qui limite la sensibilité, le débit et la facilité de mise en oeuvre. Dans le cadre de l'invention, au contraire, on peut en faisant varier l'épaisseur de la cellule, la concentration en particules magnétiques du ferrofluide, et l'amplitude du champ magnétique, faire varier à volonté la distance entre les colonnes, qui définit la taille de pores, et en particulier séparer des particules de plus grande taille qu'en gel. Ainsi, on choisit des pores plus grands, et donc une cellule plus épaisse, pour séparer des particules de plus grande taille.
   On comprend donc que, pour obtenir une résolution optimale dans une gamme de taille modérée, on a intérêt à avoir une zone de séparation d'épaisseur-constante et un champ magnétique d'intensité uniforme. Cependant, il peut aussi être avantageux pour certaines applications, en particulier s'il s'agit de séparer des particules dans une grande gamme de taille, d'utiliser une cellule d'épaisseur variable, obtenue par exemple par une forme de "coin" donnée à la zone dans laquelle s'effectue la séparation.
b/ La distance entre les obstacles à la progression des particules à séparer pouvant être rendue à volonté plus grande dans le cadre de l'invention que dans l'électrophorèse en gel, la friction est réduite et la vitesse de séparation peut être beaucoup plus grande
c/ Dans le cas de l'invention comme dans celui de la microlithographie, les obstacles forment un réseau bien ordonné et de maille très uniforme, ce qui conduit à une plus faible dispersion des vitesses, et donc à une meilleure résolution, que dans un gel qui présente une structure moins régulière et non-contrôlable. Contrairement à la microlithographie, on peut aussi dans le cadre de l'invention faire varier la taille et/ou l'espacement des obstacles sans changer la cellule de séparation elle-même.
d/ Dans le cadre de l'invention, on peut à volonté détruire et reformer le réseau d'obstacles responsable de la séparation, par exemple pour éliminer de la cellule de séparation, au moyen d'une surpression, un milieu de séparation contaminé et le remplacer par un milieu vierge, ou pour éviter le piégeage de particules au sein dudit milieu. En électrophorèse, au contraire, le réseau d'obstacle une fois formé ne peut être retiré du dispositif que manuellement. Dans les réseaux lithographiques, enfin, le réseau d'obstacles est permanent, et il ne peut être remplacé qu'en remplaçant la cellule, ce qui augmente considérablement le coût de fonctionnement, puisque le coût de fabrication de ces cellules est très élevé.
e/ Si on le souhaite, certaines propriétés du milieu de séparation comme la rigidité ou la dimension des obstacles peuvent être variées à volonté au cours d'une séparation en modifiant le champ magnétique, alors que ces propriétés sont immuables et incontrôlables dans le cas de l'électrophorèse en gel ou en réseau microlithographique.
f/ Enfin, on remarque que les particules magnétiques peuvent très facilement être retirées de la solution après séparation pour récupérer un produit purifié, par exemple à l'aide d'un aimant, alors que dans le cas d'un gel, l'élimination de l'agarose requiert une digestion par l'agarase délicate et plus coûteuse.

### Exemple de mise en oeuvre

### Préparation de l'émulsion de ferrofluides

La préparation de l'émulsion est réalisée selon la procédure publiée par J. Bibette dans J. Magn and Magn. Mat. v. 122, p 37 (1993) et J. Coll. and Int. Sci v. 147, p 474 (1991). Brièvement, l'émulsion est obtenue sous cisaillement dans un broyeur à partir d'une solution eau-SDS à 50 % (m/m), à laquelle on incorpore progressivement une solution de ferrofluides d'origine Rhône Poulenc contenant des grains de FE₂O₃ de 20 nm dans un rapport huile/Fe₂O₃ de 50 % (m/m), jusqu'à arriver à un rapport final huile/eau de 80 % (m/m). Cette solution est diluée 10 fois dans l'eau. Puis les gouttes de ferrofluides sont sédimentées sous champ magnétique, le surnageant est prélevé et l'émulsion de ferrofluides est resuspendue dans une solution Tergitol type NP10 (Sigma)/eau à 0,05 % (m/m). Cette opération de rinçage est reproduite 4 fois. Le résultat est une émulsion de ferrofluides présentant une interface huile/eau à charge électrique de surface négligeable. Avant électrophorèse, on rajoute à cette émulsion une solution de tampon TBE (TRIS 45 mM, acide borique 45 mM, EDTA 1,25 mM, pH 8,3, concentre 20 fois. La solution d'émulsion de ferrofluides finale a donc un rapport huile/eau de 8 % (m/m) et contient 0,05 % (m/m) de NP10, TBE (TRIS 45 mM, acide borique 45 mM, EDTA 1,25 mM) à pH 8,3.

### Réalisation de la cellule d'électrophorèse

Le canal 1 est un capillaire annulaire d'épaisseur choisie entre 0,01 et 0,05 mm, de 4 mm de largeur et de 24 mm de longueur. Il est réalisé, selon le schéma général présenté dans la figure 3, en déposant un film de "parafilm" (American National Cup) étiré manuellement sur une plaque de verre ronde de diamètre 32mm et présentant 4 perforations de part en part qui joueront respectivement le rôle des réservoirs 2,3,24 et 25. Le canal de séparation 1 et le canal d'introduction d'échantillon 23 sont formés par gravure sur le "parafilm", et fermés en venant appliquer sur ledit film une lamelle de microscope ronde de diamètre 30 mm. La cellule est scellée par l'application sur son pourtour de paraffine préalablement chauffée. On place alors la cellule ainsi formée dans le dispositif magnétique 37, de telle façon que le système de détection 11 soit en vis-à-vis d'une zone 10 du canal principal 1 proche de la sortie 3 de ce dernier, avec les orifices de remplissage 2,3, 24 et 25 sur le dessus, et on place dans lesdits orifices les électrodes 4,5 (et optionnellement 27 et 28).

La cellule est remplie par capillarité avec l'émulsion magnétique décrite plus haut, placée dans le réservoir 3. On applique progressivement (200 mT/minute) un champ magnétique de 5 mT à la cellule d'électrophorèse placée à l'intérieur de l'électroaimant. L'axe de l'électroaimant coïncide avec celui de la lamelle circulaire de 30 mm de la cellule d'électrophorèse. De cette façon, on assure la formation d'un réseau régulier de colonnes de ferrofluides, dont l'espacement moyen, fonction de l'épaisseur de la cellule, est de 0,002 à 0,01mm (voir Lawrence et al. International Journal of Modern Physics B, v. 8, p 2765 (1994). Le diamètre des colonnes peut être modulé par la concentration en huile de la solution de ferrofluides. Un canal transversal 23, reliant deux réservoirs 24 et 25 est utilisé pour l'introduction contrôlée de l'échantillon. Une fois le réseau de colonnes de ferrofluides formées par établissement du champ magnétique, un morceau de gel, ou un aliquot liquide contenant les chromosomes à séparer (préalablement mis à incuber pendant au moins 4 heures dans une solution 0,005mM de l'intercalant fluorescent YOYO (Molecular Probes) si l'on veut effectuer une détection par fluorescence), est placé dans le réservoir 25, et on laisse les pressions s'équilibrer dans la cellule. Le canal transversal 23 est alors rempli avec une solution contenant l'ADN à séparer, par l'établissement d'une différence de potentiel électrique entre les électrodes 26 et 27, soit éventuellement d'une différence de pression hydrostatique, entre les réservoirs 25 et 24 ; une fois le canal 23 rempli, on met fin à la différence de potentiel entre les réservoirs 24 et 25, et on applique une différence de potentiel (typiquement de quelques dizaines de volts) entre les réservoirs 2 et 3, par l'intermédiaire des électrodes 4 et 5 (dans le cas d'une séparation d'espèces négatives comme l'ADN, et en présence de ferrofluides essentiellement neutres, l'électrode 4 est au potentiel négatif). Cette méthode permet d'introduire un volume d'échantillon bien défini, correspondant approximativement au centre de la croix (volume 9).

### Observation des molécules d'ADN durant l'électrophorèse

Cette observation n'est pas nécessaire pour la séparation, mais elle est utile pour comprendre les mécanismes responsables de ladite séparation. Elle est réalisée avec un microscope inversé d'épi-fluorescence Nikon Diaphot-TMD-EF avec un objectif à immersion d'un grossissement de 100X, équipé d'un système d'intensificateur d'image (Hamamatsu) relié à une caméra CCD et son système de visualisation (Hamamatsu).

La cellule d'électrophorèse décrite plus haut est montée sur le microscope à l'aide d'un support circulaire adapté placé à l'intérieur d'un électroaimant cylindrique permettant d'obtenir des champs magnétiques de 5 mT. On observe les molécules d'ADN par l'émission de fluorescence à des longueurs d'ondes supérieures à 520 nm du YOYO (Molecular Probes) intercalé dans les molécules d'ADN et excité par de la lumière de longueur d'onde comprise entre 450 et 490 nm. La migration des molécules d'ADN à l'intérieur des structures de ferrofluides est enregistrée sur cassettes vidéo.

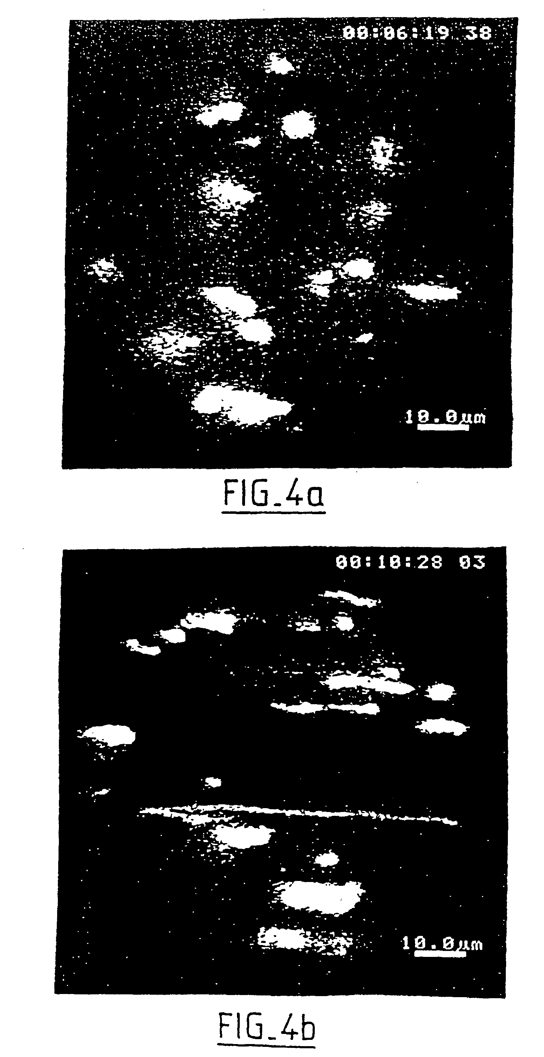

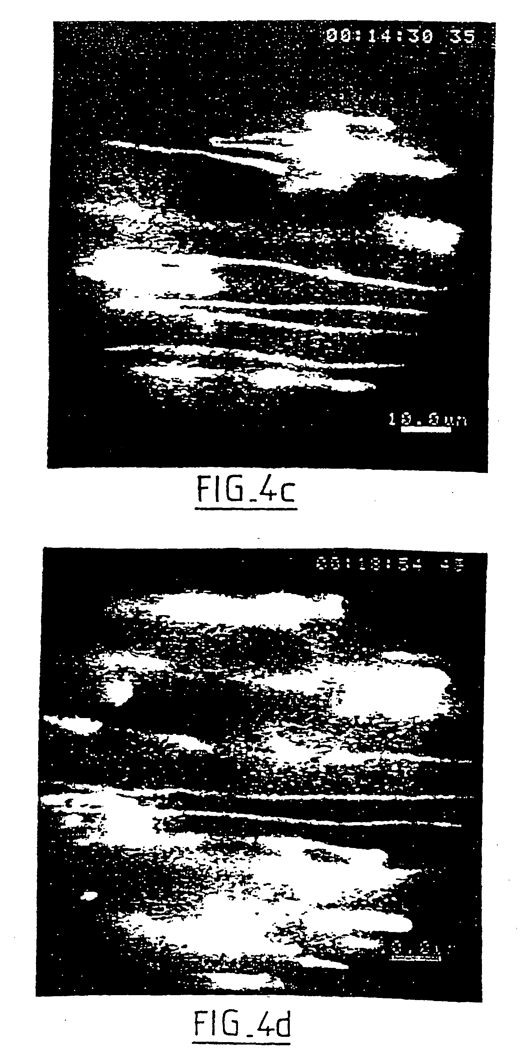

Les figures 4a à 4d montrent des exemples de migration de chromosomes de S. Cerevisae. L'observation des séquences vidéo montre clairement les points essentiels suivants :
- les colonnes de ferrofluides sont immobiles entre certaines limites de champ électrique et magnétique (ici, pour un champ magnétique de 5 mT on peut appliquer une tension de plus de 10 V aux bornes du capillaire).
- les molécules d'ADN pénètrent et se déplacent entre les structures de ferrofluides.
- les molécules d'ADN contournent les colonnes de ferrofluides sans signe d'interaction forte (adsorption), et sans signe de perturbation notable des structures de ferrofluides.
- les chromosomes les moins longs (^{~} 250000 paires de bases (pb)) gardent une conformation essentiellement sphérique à l'échelle de temps de l'observation (40 ms) (4a). Cela laisse présager qu'il pourrait y avoir une séparation en fonction de la masse moléculaire selon un mécanisme de tamis moléculaire, connu sous le nom de "Ogston sieving".
- les chromosomes de taille intermédiaire sont retardés par les obstacles et s'allongent transitoirement dans la direction du champ électrique (4b).
- les chromosomes les plus longs observés (4c-4d) sont constamment étirés dans la direction du champ électrique. Ils forment des structures en U,J,I, bien connues dans les gels classiques. La dynamique de migration de ces molécules ressemble à la dynamique de migration de molécules d'ADN de petite taille (20000^{~}50000pb) dans des gels d'agarose classique. Dans les gels classiques, il y a encore séparation quand des structures de ce type sont observées, ce qui laisse présager qu'il devrait être possible de séparer, en champ continu, des chromosomes d'une taille allant au moins jusqu'à 1 000 000 pb. Mais il est également clair que l'utilisation de méthodes de champs pulsés devrait être réalisable. Du fait de la grande mobilité des molécules dans les structures de ferrofluides comparé à leur mobilité dans les gels classiques, ces méthodes de champs pulsés en structures de ferrofluides devraient être beaucoup plus rapides qu'en gel d'agarose.
- les structures de ferrofluides peuvent être faites et défaites à volonté en présence de molécules d'ADN. Cela permet d'envisager de nouvelles méthodes de séparation basées sur le couplage entre la dynamique de formation des structures de ferrofluides et la dynamique de déformation de l'ADN.
- il est possible de rendre les structures de ferrofluides mobiles, par exemple en diminuant l'intensité du champ magnétique ou en supprimant les étapes de lavage au Tergitol, i.e. en modifiant la charge de surface des gouttelettes de ferrofluide. Cela permet d'envisager des méthodes de séparation basées sur le couplage entre la mobilité relative des structures de ferrofluides et celle de l'ADN.

### Obtention de profils d'élution

On a utilisé ici le montage de microscopie pour établir par intégration sur toute l'image au cours du temps des électrophérogrammes (profils de concentration en ADN en fonction du temps). Toutefois, on pourrait pour ce faire utiliser d'autres dispositifs de détection connus de l'Homme de l'Art.

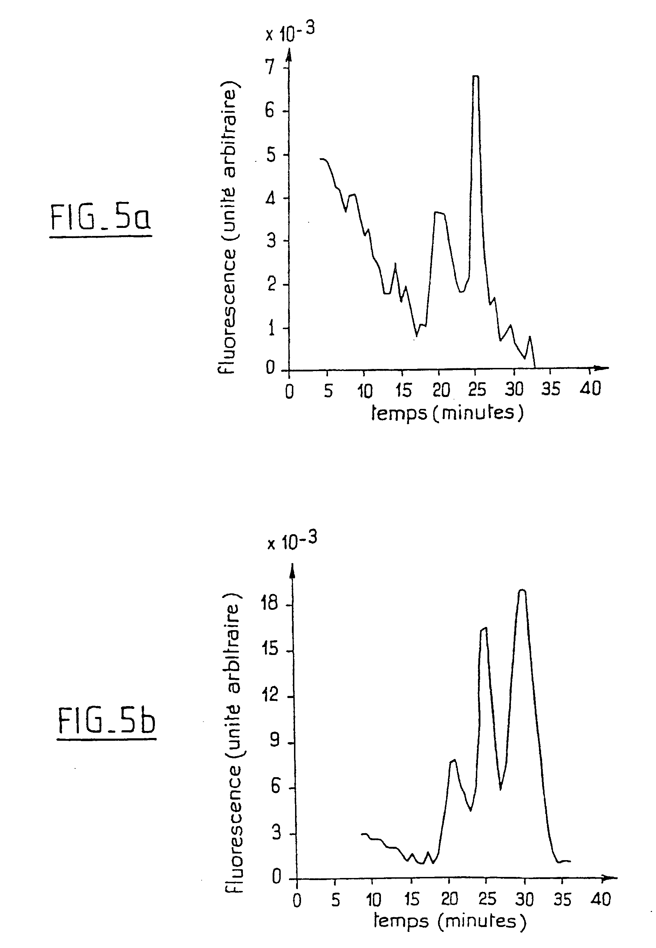

La figure 5a représente le profil obtenu avec l'injection d'un échantillon contenant uniquement de l'ADN de phase lambda, à 20 v/cm sur une distance de migration de 20 mm. Le premier pic correspond à des produits de dégradation (difficilement quantifiables en électrophorèse sur gel) et le deuxième pic aux chromosomes intacts.

La figure 5b représente le profil obtenu en mélangeant l'échantillon contenant l'ADN de phage lambda (48,5 kb) et de l'ADN de phage T2 (140 kb). Les deux premiers pics sortent après un temps identique à celui observé en 5a, le troisième pic est celui de T2. Cette séparation est obtenue en 1/2 heure, alors que plusieurs heures sont nécessaires en champ pulsé sur gel.

## Revendications

1. Méthode de séparation d'objets en suspension dans un liquide, selon laquelle on introduit'ces objets dans un milieu de séparation qui est une suspension colloïdale de particules magnétiques, on applique à ces objets au moins une force motrice non magnétique apte à les déplacer et on applique au milieu de séparation un champ magnétique qui y crée au moins une zone riche et une zone pauvre en particules magnétiques, **caractérisé en ce que** le champ magnétique est tel que la (ou les alternances )de zones riche(s) et pauvre(s) en particules magnétiques qu'il crée est (sont) située(s) sur la trajectoire des objets déplacés par la force motrice et constitue(nt) des obstacles ralentissant lesdits objets.

2. Méthode selon la revendication 1, dans laquelle la force de migration est obtenue par application d'un champ électrique au sein du milieu de séparation, ladite méthode constituant une méthode d'électrophorèse.

3. Méthode selon la revendication 2, **caractérisée en ce que** les particules magnétiques du fluide de séparation sont essentiellement neutres.

4. Méthode selon l'une des revendications précédentes, **caractérisée en ce que** le champ magnétique est essentiellement perpendiculaire à la direction de déplacement des objets à séparer.

5. Méthode selon l'une des revendications précédentes, **caractérisée en ce que** le champ magnétique est essentiellement constant dans la zone où il est appliqué.

6. Méthode selon l'une des revendications 1 à 4, **caractérisée en ce que** le champ magnétique présente un gradient d'intensité dans la zone où il est appliqué.

7. Méthode selon l'une des revendications précédentes, **caractérisée en ce que** la zone de séparation présente dans la direction du champ magnétique une épaisseur qui est essentiellement constante, cette épaisseur étant choisie, avec la concentration des particules magnétiques dans le fluide de séparation et l'amplitude du champ magnétique, en fonction des dimensions des objets à séparer.

8. Méthode selon l'une des revendications 1 à 6, **caractérisée en ce que** la zone de séparation présente une épaisseur variable selon la direction de migration préférentielle des objets à séparer, l'épaisseur moyenne de cette zone étant choisie, avec la concentration des particules magnétiques dans le fluide de séparation et l'amplitude du champ magnétique, en fonction des dimensions des objets à séparer.

9. Méthode selon la revendication 8, **caractérisée en ce que** les parois de la zone de séparation qui sont essentiellement perpendiculaires au champ magnétique sont planes et sensiblement inclinées l'une par rapport à l'autre.

10. Méthode selon l'une des revendications précédentes, **caractérisée en ce que** l'épaisseur (e) de la zone de séparation est comprise entre 1 µm et 1 mm.

11. Méthode selon la revendication 10, **caractérisée en ce que** l'épaisseur (e) de la zone de séparation est comprise entre 10 µm et 100 µm.

12. Méthode selon l'une des revendications précédentes, **caractérisée par** les différentes étapes suivantes, effectuées dans un ordre quelconque :
- remplissage de la zone de séparation par le milieu de séparation ;
- activation du champ magnétique ;
- introduction d'un côté de la zone de séparation d'une certaine quantité d'un échantillon contenant les objets à séparer ;
- activation des moyens exerçant une force motrice sur les objets à séparer.

13. Méthode selon la revendication 12, dans laquelle le remplissage de la zone de séparation par le milieu de séparation précède l'activation du champ magnétique.

14. Méthode selon l'une des revendications 1 à 13, dans laquelle l'application du champ magnétique précède l'introduction d'échantillon.

15. Méthode selon l'une des revendications 1 à 13, dans laquelle l'introduction d'échantillon précède l'activation des moyens exerçant une force motrice sur les objets à séparer.

16. Méthode selon la revendication 12, **caractérisée en ce qu'**en sortie de la zone de séparation, on détecte le passage des objets séparés et/ou on collecte les objets (20) séparés.

17. Méthode selon l'une des revendications précédentes, **caractérisée en ce qu'**on remplace automatiquement le fluide colloïdale de particules magnétiques entre deux opérations de séparation.

18. Méthode selon l'une des revendications précédentes, **caractérisée en ce que** les objets séparées sont des acides nucléiques, notamment de l'ADN.

19. Méthode selon la revendication 18, **caractérisée en ce que** les molécules séparées sont des molécules d'ADN dont la taille est comprise entre 50 Kilo bases et plusieurs centaines de Mega bases.

20. Méthode selon l'une des revendications 1 à 17, **caractérisée en ce que** les objets séparés sont des cellules, des virus, des suspensions colloïdales non magnétiques, des liposomes.

21. Dispositif pour la séparation d'objets en suspension dans un liquide comportant un milieu de séparation qui est une suspension colloïdale de particules magnétiques, des moyens pour appliquer aux objets introduits dans ledit milieu au moins une force motrice non magnétique apte à les déplacer et des moyens pour appliquer au milieu de séparation un champ magnétique qui y crée au moins une zone riche et une zone pauvre en particules magnétiques, **caractérisé en ce que** le champ magnétique est tel que la (ou les alternances )de zones riche(s) et pauvre(s) en particules magnétiques qu'il crée est (sont) située(s) sur la trajectoire des objets déplacés par la force motrice et constitue(nt) des obstacles ralentissant lesdits objets.

## Patentansprüche

1. Verfahren zum Trennen von in einer Flüssigkeit suspendierten Objekten, bei welchem man diese Objekte in ein Trennmittel einführt, welches eine kolloidale Suspension aus magnetischen Teilchen ist, wobei man diese Objekte wenigstens einer nichtmagnetischen treibenden Kraft aussetzt, welche geeignet ist, diese zu versetzen und man auf das Separationsmittel ein magnetisches Feld anwendet, welches dort wenigstens einen an magnetischen Teilchen reichen Bereich und einen armen Bereich erzeugt, **dadurch gekennzeichnet, daß** das magnetische Feld derart gewählt ist, daß der (die) durch es erzeugte(n) Wechsel von an magnetischen Teilchen reichen und armen Bereichen sich auf der Bahn der durch die treibende Kraft versetzten Objekte befindet und Hindernisse darstellt (darstellen), welche die Objekte verlangsamen.

2. Verfahren nach Anspruch 1, bei welchem die Migrationskraft erzielt wird, indem ein elektrisches Feld auf das Innere des Trennmittels angewendet wird, wobei das Verfahren ein Elekrophoreseverfahren darstellt.

3. Verfahren nach Anspruch 2, **dadurch gekennzeichnet, daß** die magnetischen Teilchen der Trennflüssigkeit im wesentlichen neutral sind.

4. Verfahren nach einem der vorangehenden Ansprüche, **dadurch gekennzeichnet, daß** das magnetische Feld im wesentlichen senkrecht zur Versetzungsrichtung der zu trennenden Objekte ist.

5. Verfahren nach einem der vorangehenden Ansprüche, **dadurch gekennzeichnet, daß** das magnetische Feld in dem Bereich, in dem es angewendet wird, im wesentlichen konstant ist.

6. Verfahren nach einem der Ansprüche 1 bis 4, **gekennzeichnet dadurch, daß** das magnetische Feld in dem Bereich, in dem es angewendet wird, einen Intensitätsgradienten aufweist.

7. Verfahren nach einem der vorangehenden Ansprüche, **dadurch gekennzeichnet, daß** der Trennbereich in Richtung des magnetischen Felds eine im wesentlichen konstante Dicke aufweist, wobei diese Dicke, wie auch die Konzentration der magnetischen Teilchen in der Trennflüssigkeit und die Amplitude des magnetischen Felds in Abhängigkeit von der Größe der zu trennenden Objekte gewählt wird.

8. Verfahren nach einem der Ansprüche 1 bis 6, **dadurch gekennzeichnet, daß** der Trennbereich eine entsprechend der bevorzugten Migrationsrichtung der zu trennenden Objekte variable Dicke aufweist, wobei die mittlere Dicke dieses Bereichs, wie auch die Konzentration der magnetischen Teilchen in der Trennflüssigkeit und die Amplitude des magnetischen Felds in Abhängigkeit von der Größe der zu trennenden Objekte gewählt wird.

9. Verfahren nach Anspruch 8, **dadurch gekennzeichnet, daß** die Wände des Trennbereichs, welche im wesentlichen rechtwinklig zum magnetischen Feld sind, eben und zueinander merklich geneigt sind.

10. Verfahren nach einem der vorangehenden Ansprüche, **dadurch gekennzeichnet, daß** die Dicke (e) des Trennbereichs zwischen 1 µm und 1 mm liegt.

11. Verfahren nach Anspruch 10, **dadurch gekennzeichnet, daß** die Dicke (e) des Trennbereichs zwischen 10 µm und 100 µm liegt.

12. Verfahren nach einem der vorangehenden Ansprüche, **gekennzeichnet durch** die verschiedenen folgenden Schritte, welche in beliebiger Reihenfolge durchgeführt werden:
- Auffüllen des Trennbereichs mit dem Trennmittel;
- Aktivieren des magnetischen Felds;
- Einführen von einer Seite des Trennbereichs einer bestimmten Menge einer Probe, welche die zu trennenden Objekte enthält;
- Aktivieren der Mittel, welche eine treibende Kraft auf die zu trennenden Objekte ausüben;

13. Verfahren nach Anspruch 12, bei welchem dem Auffüllen des Trennbereichs mit dem Trennmittel die Aktivierung des magnetischen Felds vorhergeht.

14. Verfahren nach einem der Ansprüche 1 bis 13, bei welchem der Anwendung des magnetischen Felds die Einführung der Probe vorhergeht.

15. Verfahren nach einem der Ansprüche 1 bis 13, bei welchem der Einführung der Probe die Aktivierung der Mittel vorhergeht, welche eine treibende Kraft auf die zu trennenden Objekte ausübt.

16. Verfahren nach Anspruch 12, **dadurch gekennzeichnet, daß** beim Austritt aus dem zu trennenden Bereich das Passieren der zu trennenden Objekte nachgewiesen wird und/oder die getrennten Objekte (20) gesammelt werden.

17. Verfahren nach einem der vorangehenden Ansprüche, **dadurch gekennzeichnet, daß** die kolloidale Flüssigkeit aus magnetischen Teilchen zwischen zwei Trennvorgängen automatisch ersetzt wird.

18. Verfahren nach einem der vorangehenden Ansprüche, **dadurch gekennzeichnet, daß** die getrennten Objekte Nukleinsäuren sind, beispielsweise DNA.

19. Verfahren nach Anspruch 18, **dadurch gekennzeichnet, daß** die getrennten Moleküle DNA-Moleküle sind, deren Größe zwischen 50 Kilobasen und mehreren hundert Megabasen liegt.

20. Verfahren nach einem der Ansprüche 1 bis 17, **dadurch gekennzeichnet, daß** die getrennten Objekte Zellen, Viren, nichtmagnetische kolloidale Suspensionen oder Liposomen sind.

21. Vorrichtung zum Trennen von in einer Flüssigkeit suspendierten Objekten, welches aufweist: ein Trennmittel, das eine kolloidale Suspension von magnetischen Teilchen ist, Mittel zum Anwenden wenigstens einer nichtmagnetischen treibenden Kraft auf die in das Mittel eingeführten Objekte, welche geeignet ist diese zu versetzen, sowie Mittel zum Anwenden eines magnetischen Felds auf das Trennmittel, welches dort wenigstens einen an magnetischen Teilchen reichen und einen armen Bereich erzeugt, **dadurch gekennzeichnet, daß** das magnetische Feld derart gewählt ist, daß der (die) durch es erzeugte(n) Wechsel von an magnetischen Teilchen reichen und armen Bereichen sich auf der Bahn der durch die treibende Kraft versetzten Objekte befindet und Hindernisse darstellt (darstellen), welche die Objekte verlangsamen.

## Claims

1. Method for separating objects in suspension in a liquid, in which these objects are introduced into a separation medium, which is a colloidal suspension of magnetic particles, at least one non-magnetic motive force capable of displacing these objects is applied to them and a magnetic field is applied to the separation medium, which field creates therein at least one zone rich and one zone lean in magnetic particles, **characterized in that** the magnetic field is such that the alternation(s) of zones rich and lean in magnetic particles that it creates is (are) located on the path of the objects displaced by the motive force and constitutes (constitute) obstacles that slow down the said objects.

2. Method according to Claim 1, in which the migration force is obtained by applying an electric field within the separation medium, the said method constituting an electrophoresis method.

3. Method according to Claim 2, **characterized in that** the magnetic particles of the separation fluid are essentially neutral.

4. Method according to one of the preceding claims, **characterized in that** the magnetic field is essentially perpendicular to the direction of motion of the objects to be separated.

5. Method according to one of the preceding claims, **characterized in that** the magnetic field is essentially constant in the zone where it is applied.

6. Method according to one of Claims 1 to 4, **characterized in that** the magnetic field has an intensity gradient in the zone where it is applied.

7. Method according to one of the preceding claims, **characterized in that** the separation zone has a thickness which is essentially constant in the direction of the magnetic field, this thickness being chosen, with the concentration of the magnetic particles in the separation fluid and the amplitude of the magnetic field, as a function of the dimensions of the objects to be separated.

8. Method according to one of Claims 1 to 6, **characterized in that** the separation zone has a variable thickness along the preferential migration direction of the objects to be separated, the average thickness of this zone being chosen, with the concentration of the magnetic particles in the separation fluid and the amplitude of the magnetic field, as a function of the dimensions of the objects to be separated.

9. Method according to Claim 8, **characterized in that** the walls of the separation zone which are essentially perpendicular to the magnetic field are plane and substantially inclined relative to one another.

10. Method according to one of the preceding claims, **characterized in that** the thickness (e) of the separation zone is between 1 µm and 1 mm.

11. Method according to Claim 10, **characterized in that** the thickness (e) of the separation zone is between 10 µm and 100 µm.

12. Method according to one of the preceding claims, **characterized by** the various following steps, carried out in arbitrary order:
- filling the separation zone with the separation medium;
- activating the magnetic field;
- introducing a certain quantity of a sample containing the objects to be separated on one side of the separation zone;
- activating means exerting a motive force on the objects to be separated.

13. Method according to Claim 12, in which the filling of the separation zone with the separation medium precedes the activation of the magnetic field.

14. Method according to one of Claims 1 to 13, in which the application of the magnetic field precedes the sample introduction.

15. Method according to one of Claims 1 to 13, in which the sample introduction precedes the activation of the means exerting a motive force on the objects to be separated.

16. Method according to Claim 12, **characterized in that**, at the outlet of the separation zone, the passing of the separated objects is detected and/or the separated products are collected.

17. Method according to one of the preceding claims, **characterized in that** the colloidal fluid of magnetic particles is automatically replaced between two separation operations.

18. Method according to one of the preceding claims, **characterized in that** the objects separated are nucleic acids, in particular DNA.

19. Method according to Claim 18, **characterized in that** the molecules separated are DNA molecules whose size is between 50 kilobases and several hundreds of megabases.

20. Method according to one of Claims 1 to 17, **characterized in that** the objects separated are cells, viruses, non-magnetic colloidal suspensions and liposomes.

21. Device for the separation of objects in suspension in a liquid comprising a separation medium, which is a colloidal suspension of magnetic particles, means for applying at least one non-magnetic motive force to the objects introduced into the said medium, the said force being capable of displacing them, and means for applying a magnetic field to the separation medium, which field creates therein at least one zone rich and one zone lean in magnetic particles, **characterized in that** the magnetic field is such that the alternation(s) of zones rich and lean in magnetic particles that it creates is (are) located on the path of the objects displaced by the motive force and constitutes (constitute) obstacles that slow down the said objects.
